# EUROPÄISCHE PATENTANMELDUNG

(11) **EP 0 602 413 A1**
(43) Veröffentlichungstag der Anmeldung: **22.06.1994**
(21) Anmeldenummer: 93118799.1
(22) Anmeldetag: 23.11.1993
(51) Int. Cl.: B23P 15/26, B21C 37/08, F28D 20/00, B23K 20/10

(54) **Verfahren zur Herstellung von Latentwärmespeicherzellen eines Kraftfahrzeug-Wärmespeichers und Vorrichtung für die Durchführung des Verfahrens**

(30) Priorität: 08.12.1992 DE 4241214; 07.09.1993 DE 4330204
(71) Anmelder: FRITZ WERNER, PRÄZISIONSMASCHINENBAU GmbH, D-65366 Geisenheim (DE)
(72) Erfinder: Boltz, Hartmut, Dipl.-Ingenieur, D-56321 Brey (DE); Christ, Richard, Dr. Ing., D-65281 Emmelshausen (DE); Jakobi, Karl-Josef, Dr.Maschinenbau-Ingenieur, D-65366 Geisenheim (DE)
(74) Vertreter: Andrejewski, Walter, Dr.

(57) **Zusammenfassung**

Verfahren zur Herstellung von in bezug auf die Außenform rechteckig-plattenförmigen Latentwärmespeicherzellen aus dünnwandigem Blech für einen Kraftfahrzeug-Wärmespeicher. Es wird für jede Latentwärmespeicherzelle von einem rechteckigen Blechzuschnitt ausgegangen. Der Blechzuschnitt (1) wird um seine Längsmitte mit Hilfe des als aufundnieder bewegbares Biegeschwert ausgeführten Ambosses (2) einer mit Amboß (2) und Sonotrode (3) ausgerüsteten Ultraschall-Schweißmaschine zu einer an den Stirnseiten offenen U-förmigen Tasche (4) gebogen, deren Taschenwände die Oberseite des Ambosses (2) der Ultraschall-Schweißmaschine an jeder Seite mit Randstreifen (5) überragen. Die Randstreifen (5) werden mit Hilfswerkzeugen (6), die quer zur Aufundnieder-Bewegung des Ambosses hinundher bewegbar sind, zu einer auf der Oberseite des Ambosses aufliegenden Überlappungsnaht (7) gebogen. Die Überlappungsnaht (7) wird mit Hilfe der unter Zwischenschaltung der Überlappungsnaht auf den Amboß (2) abgesenkten Sonotrode (3) der Ultraschall-Schweißmaschine zu einer dichten Schweißnaht verschweißt. Die stirnseitig offene Latentwärmespeicherzelle (10) wird von dem Amboß abgezogen und danach an den Stirnseiten verschlossen. Dabei oder danach wird die Latentwärmespeicherzelle (11) mit dem Latentwärmespeichermedium gefüllt. - Auch eine Vorrichtung für die Durchführung des Verfahrens wird angegeben.

## Beschreibung

Die Erfindung betrifft ein Verfahren zur Herstellung von in bezug auf die Außenform rechteckig-plattenförmigen Latentwärmespeicherzellen eines Kraftfahrzeug-Wärmespeichers aus dünnwandigem Blech. Die Blechdicke beträgt nur einige Zehntelmillimeter oder weniger. Die Erfindung betrifft fernerhin eine Vorrichtung zur Durchführung des Verfahrens.-Kraftfahrzeug-Wärmespeicher sind in verschiedenen Ausführungsformen bekannt. Sie sind z. B. zwischen Motor und Heizkörper im Kühlmittelkreislauf eines Kraftfahrzeuges angeordnet. Sie haben erhebliche Temperaturwechselbeanspruchungen sowie die daraus resultierenden positiven und negativen Wärmedehnungen, insbes. aber bei fahrenden Kraftfahrzeugen auch sehr erhebliche dynamische Beanspruchungen aufzunehmen. Hinzukommen Korrosionsbeanspruchungen, wenn das Latentwärmespeichermedium diese auslöst. - Das alles gilt insbes. für die Latentwärmespeicherzellen. Diese erfahren zusätzliche Beanspruchungen, weil die Phasenumwandlungen, die das Latentwärmespeichermedium beim Aufladen und Entladen erfährt, häufig von nicht unbeachtlichen Volumenänderungen begleitet sind. Im Ergebnis präsentieren sich ein solcher Kraftfahrzeug-Wärmespeicher und seine Latentwärmespeicherzellen als Aggregate, die in einem sehr komplexen Beanspruchungsspektrum arbeiten müssen, andererseits aber ausgesprochene Massenprodukte sind, und als solche gefertigt werden müssen, wenn eine Vielzahl von Kraftfahrzeugen mit solchen Kraftfahrzeug-Wärmespeichern auszurüsten ist.

Bei dem bekannten Verfahren, von dem die Erfindung ausgeht (DE 40 36 392 A1), wird offenbar mit einer nahtlosen, stirnseitig offenen Blechhülse gearbeitet, aus der eine stirnseitig offene Latentwärmespeicherzelle geformt wird. In diese werden stirnseitig abstandshaltende Röhrchen eingelötet. Die Herstellung von nahtlosen Blechhülsen ist um so schwieriger, je dünner das Blech ist. Die bekannten Maßnahmen sind daher aufwendig. Das gilt auch dann, wenn nicht von einer nahtlosen Blechhülse ausgegangen wird, sondern aus einem rechteckigen Blechzuschnitt eine U-förmige Tasche geformt wird, in die ein umlaufender Rahmen aus einem abstandshaltenden Röhrchen eingelötet wird. Wird die Lötstelle erwärmt, so entstehen in beiden Fällen Probleme, weil die Röhrchen einer Preßschweißung oder Preßlötung mit hohem Preßdruck nicht leicht standhalten.

Der Erfindung liegt zunächst die Aufgabe zugrunde, ein einfaches Verfahren zur Herstellung von in bezug auf die Außenform rechteckig-plattenförmigen Latentwärmespeicherzellen aus dünnwandigem Blech anzugeben, welches sich problemlos in eine automatische Massenfertigung integrieren läßt und zu Latentwärmespeicherzellen führt, die dem komplexen Beanspruchungsspektrum mit langer Standzeit sicher gewachsen sind.

Zur Lösung dieser Aufgabe ist Gegenstand der Erfindung ein solches Verfahren mit den folgenden Verfahrensschritten:
a) es wird für jede Latentwärmespeicherzelle von einem rechteckigen Blechzuschnitt ausgegangen,
b) der Blechzuschnitt wird um seine Längsmitte mit Hilfe des als aufundnieder bewegbares Biegeschwert ausgeführten Ambosses einer mit Amboß und Sonotrode ausgerüsteten Ultraschall-Schweißmaschine zu einer an den Stirnseiten offenen U-förmigen Tasche gebogen, deren Taschenwände die Oberseite des Ambosses der Ultraschall-Schweißmaschine an jeder Seite mit Randstreifen überragen,
c) die Randstreifen werden mit Hilfswerkzeugen, die quer zur Aufundnieder-Bewegung des Ambosses hinundher bewegbar sind, zu einer auf der Oberseite des Ambosses aufliegenden Überlappungsnaht gebogen,
d) die Überlappungsnaht wird mit Hilfe der unter Zwischenschaltung der Überlappungsnaht auf den Amboß abgesenkten Sonotrode der Ultraschall-Schweißmaschine zu einer dichten Schweißnaht verschweißt,
wobei die stirnseitig offene Latentwärmespeicherzelle von dem Amboß abgezogen und danach an den Stirnseiten verschlossen sowie dabei oder danach mit dem Latentwärmespeichermedium gefüllt wird. Die Werkstoffe, mit denen im Rahmen der Erfindung gearbeitet wird, richten sich hauptsächlich nach dem Latentwärmespeichermedium. Für viele Latentwärmespeichermedien kann von einem Blechzuschnitt aus technisch reinem, praktisch sauerstofffreiem Kupfer ausgegangen werden. Man kann aber auch von einem Blechzuschnitt aus Stahl mit Nickelplattierung ausgehen. Beide Maßnahmen empfehlen sich insbes. dann, wenn das Latentwärmespeichermedium aus Bariumhydroxid und Wasser aufgebaut ist (Bariumhydroxid-Oktahydrat).

Die Erfindung geht von der Erkenntnis aus, daß im Rahmen des beschriebenen Beanspruchungsspektrums Ultraschall-Schweißnähte sich durch hohe Standzeit auszeichnen. Das gilt insbes., wenn mit Blechzuschnitten aus technisch reinem, praktisch sauerstofffreiem Kupfer gearbeitet wird. Die Erfindung geht ferner von der Erkenntnis aus, daß der Amboß einer Ultraschall-Schweißmaschine eine Doppelfunktion erfüllen kann, nämlich zunächst in einem Verfahrensschritt als Biegewerkzeug funktionieren kann, danach in einem zweiten Verfahrensschritt als Schweißamboß einer Ultraschall-Schweißmaschine, die eine entsprechend zugeordnete Sonotrode aufweist. Die Blechzuschnitte werden gleichsam mit einem Werkzeug zunächst gebogen und dann verschweißt. Die Integration in eine automatische Massenfertigung ist ohne Schwierigkeiten möglich. Dabei kann mit einem Amboß gearbeitet werden, der eine Dicke von ein bis einigen Millimetern, vorzugsweise von etwa 5 mm, aufweist, d. h. sehr dünn ist. Auf diese Weise können Latentwärmespeicherzellen sehr geringer Dicke hergestellt werden, was für die Thermodynamik der Zusammenhänge von Vorteil ist. Nach bevorzugter Ausführungsform der Erfindung wird man die Ultraschall-Schweißnaht schweißgutbeilagefrei ausführen.

Im Rahmen der Erfindung kann der Verschluß der stirnseitig offenen Latentwärmespeicherzellen auf verschiedene Art und Weise erfolgen. Zu einem allen Ansprüchen und Beanspruchungen genügenden Verschluß kommt man dadurch, daß in die Stirnseiten der stirnseitig offenen Latentwärmespeicherzelle im Querschnitt U-förmige metallische Zellenböden unter Beifügung von Lot, nach außen offen, eingesetzt werden, in die eine Preßleiste eingeführt wird, und wobei unter Verwendung einer von außen gegen den Rand der Latentwärmespeicherzelle gesetzten Gegenpreßleiste die Zellenböden mittels Preßlötung eingelötet werden. Wird mit einem Blechzuschnitt aus technisch reinem Kupfer, praktisch sauerstofffrei, gearbeitet, was sich, wie bereits erläutert empfiehlt, so wird zweckmäßig ein Hartlot verwendet. Nach bevorzugter Ausführungsform der Erfindung bestehen die Zellenböden aus dem gleichen Werkstoff wie der Blechzuschnitt der Latentwärmespeicherzellen. Zu Lötverbindungen, die allen Anforderungen genügen und in kurzen Taktzeiten sehr sicher hergestellt werden können, gelangt man dadurch, daß die Preßlötung mit induktiver Erwärmung der für die Preßlötung vorgesehenen Bereiche der Zellenböden und der Latentwärmespeicherzelle durchgeführt wird. Die Temperatur wird dabei so eingerichtet, wie es der Werkstoff verlangt. Um das dünne Blech, aus dem die Latentwärmespeicherzelle gebildet ist, beim Löten zu schonen, so daß störende Rekristallisationen und andere metallurgische Veränderungen auf den eigentlichen Lötbereich beschränkt werden und sich in das Blech hinein nicht fortpflanzen, lehrt die Erfindung daß zumindest die Latentwärmespeicherzelle im unmittelbaren Anschluß an die für die Preßlötung vorgesehenen Bereiche, z. B. durch Beblasen mit Schutzgas, gekühlt wird. Um in die fertige Latentwärmespeicherzelle auf einfache Weise das Latentwärmespeichermedium einzuführen, lehrt die Erfindung, daß zumindest einer der Zellenböden mit einem in den Innenraum der Latentwärmespeicherzelle mündenden Rohrstutzen versehen wird, über den die Einfüllung des Latentwärmespeichermediums durchgeführt wird. Wird mit nur einem Röhrchen gearbeitet, so dient dieses gleichzeitig zur Einfüllung des Latentwärmespeichermediums und zur Entlüftung des Innenraumes der Latentwärmespeicherzelle beim Einfüllen des Wärmespeichermediums. Dazu kann eine Hohlnadel in das Röhrchen eingeführt werden, zweckmäßigerweise so, daß beim Einfüllen des Wärmespeichermediums eine Schaumbildung nicht entsteht. Insoweit kann die Hohlnadel nach Maßgabe des steigenden Spiegels der Füllung auch mitgeführt werden. Sind zwei Rohrstutzen vorhanden, so kann einer der Befüllung und der andere der Entlüftung dienen.

Das beschriebene Verfahren ist für eine automatische Serienfertigung der Latentwärmespeicherzellen geeignet. Vorrichtungen zur Durchführung dieses Verfahrens können auf verschiedene Weise gestaltet werden. Stets kommt es darauf an, die Vorrichtung so auszulegen, daß die Ultraschall-Schweißnaht langfristig, wenn der Latentwärmespeicher in ein Kraftfahrzeug eingebaut ist, allen Anforderungen genügt.

Der Erfindung liegt in bezug auf die Vorrichtung die Aufgabe zugrunde, eine Vorrichtung anzugeben, die für die Durchführung des Verfahrens besonders geeignet ist.

Gegenstand der Erfindung ist eine Vorrichtung für die Durchführung des Verfahrens zur Herstellung von in bezug auf die Außenform rechteckigplattenförmigen Latentwärmespeicherzellen eines Kraftfahrzeug-Wärmespeichers aus einem dünn-wandigen, rechteckigen Blechzuschnitt, welche Latentwärmespeicherzellen ein taschenförmiges Bauteil und darin stirnseitig eingesetzte Zellenböden aufweisen, - mit einem Auflagetisch mit Formgebungsschlitz für die einzelnen Blechzuschnitte, einem über dem Formgebungsschlitz angeordneten Biegeschwert mit der Taschenform der Latentwärmespeicherzellen entsprechendem Querschnitt, welches unter U-förmiger Verformung eines aus dem Auflagetisch aufgelegten Blechzuschnittes in den Formgebungsschlitz einsenkbar ist, und Überlappungsschiebern an dem Auflagetisch, mit denen das Biegeschwert überragende Randbereiche des U-förmig verformten Blechzuschnittes zu einem Überlappungsbereich übereinanderlegbar sind, wobei außerdem die Kombination der folgenden Merkmale verwirklicht ist:
a) das Biegeschwert ist als Amboß einer der Vorrichtung angehörenden Ultraschall-Schweißvorrichtung ausgebildet,
b) die Ultraschall-Schweißvorrichtung ist mit einer rotationsangetriebenen Sonotrode mit rollenförmigem oder walzenförmigem Sonotrodenkopf versehen, die in oder an einem Sonotrodenhalter angebracht ist und auf den Überlappungsbereich aufsetzbar ist,
c) der Sonotrodenhalter ist mit einer Spindel längs des Überlappungsbereiches translatorisch bewegbar und dazu mit einem Sonotrodenhalterantrieb versehen,
wobei die Auslegung des Rotationsantriebes für den Sonotrodenkopf sowie die des Sonotrodenhalterantriebes so eingerichtet sind, daß die Umfangsgeschwindigkeit des Sonotrodenkopfes mit der translatorischen Geschwindigkeit des Sonotrodenhalters übereinstimmt. Nach bevorzugter Ausführungsform der Erfindung sind dazu der Antrieb des Sonotrodenhalters und/oder der Rotationsantrieb abstimmbar. Der Sonotrodenkopf erfährt beim Kontakt mit den überlappten Randbereichen des Blechzuschnittes einen Verschleiß. Folglich muß die Abstimmung nachgeführt werden. Dazu lehrt die Erfindung, daß der Antrieb des Sonotrodenhalters und/oder der Rotationsantrieb nach Maßgabe der Abnutzung des Sonotrodenkopfes abstimmbar sind.

Im einzelnen bestehen im Rahmen der Erfindung mehrere Möglichkeiten der weiteren Ausbildung und Gestaltung. So kann das Biegeschwert an beidseits des Biegeschwertes angeordneten Spindeln auf und nieder bewegbar sein. In bezug auf die Überlappungsschieber lehrt die Erfindung, daß diese an Stelltriebe, z. B. in Form von Stellspindeln, angeschlossen sind.

Es versteht sich, daß die erfindungsgemäße Vorrichtung in bezug auf ihren Arbeitstakt so einzurichten ist, wie es das Verfahren bei zügiger Abwicklung der einzelnen Verfahrensschritte verlangt. Dazu stehen im Rahmen der modernen Antriebs- und Steuerungstechnik eine Vielzahl von Möglichkeiten zur Verfügung, die der Fachmann ohne weiteres einsetzen kann. Darüberhinaus kann eine Steuereinrichtung mit integriertem Rechner vorgesehen werden, der den Antrieb des Sonotrodenhalters sowie den Rotationsantrieb des Sonotrodenkopfes nach Maßgabe des dem Rechner zugeführten Wertes des Abstandes zwischen einem Festpunkt und dem Überlappungsbereich koordiniert und die Antriebe entsprechend steuert. Auf diese Weise kann der Verschleiß des Sonotrodenkopfes im Rahmen einer automatischen Fertigung auf einfache Weise berücksichtigt werden.

Im folgenden wird die Erfindung anhand einer lediglich ein Ausführungsbeispiel darstellenden Zeichnung ausführlicher erläutert.
Die Figuren 1 bis 9 erläutern das Verfahren. Im übrigen zeigen in schematischer Darstellung
Fig. 10 eine Ansicht einer erfindungsgemäßen Vorrichtung,
Fig. 11 eine Draufsicht auf den Gegenstand nach Fig. 10,
Fig. 12 den Gegenstand nach Fig. 10 in einer anderen Funktionsstellung,
Fig. 13 einen Schnitt in Richtung B-B durch den Gegenstand der Fig. 12,
Fig. 14 den Gegenstand nach Fig. 13 in einer anderen Funktionsstellung und
Fig. 15 eine Ansicht der Sonotrode aus dem Gegenstand der Fig. 10.

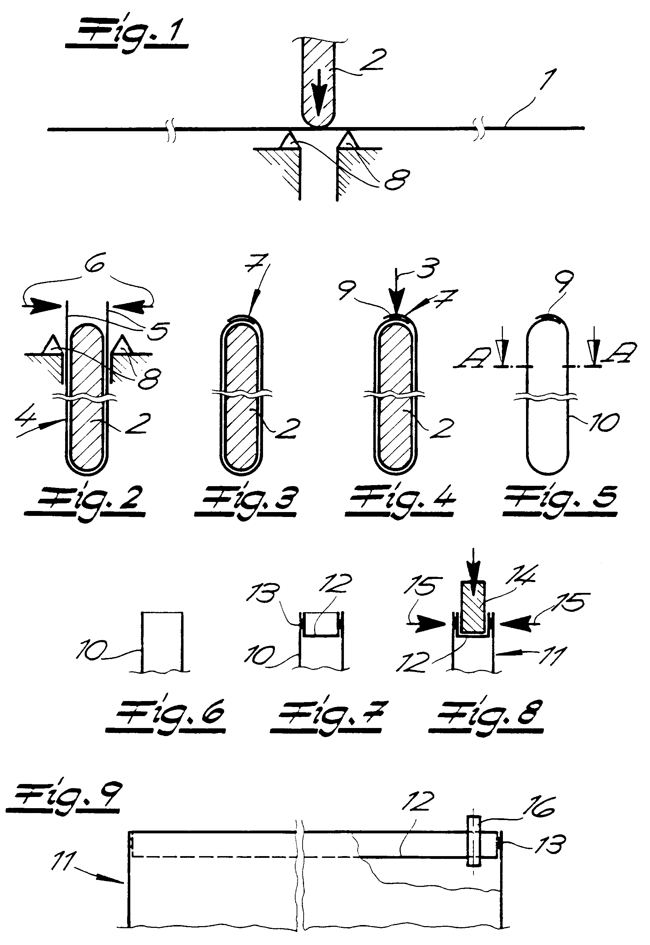

Das im Schema der Figuren 1 bis 9 erläuterte Verfahren dient zur Herstellung von in bezug auf die Außenform rechteckig-plattenförmigen Latentwärmespeicherzellen eines Kraftfahrzeug-Wärmespeichers. Der Kraftfahrzeug-Wärmespeicher wurde nicht gezeichnet. Die Latentwärmespeicherzellen bestehen aus dünnwandigem Blech.

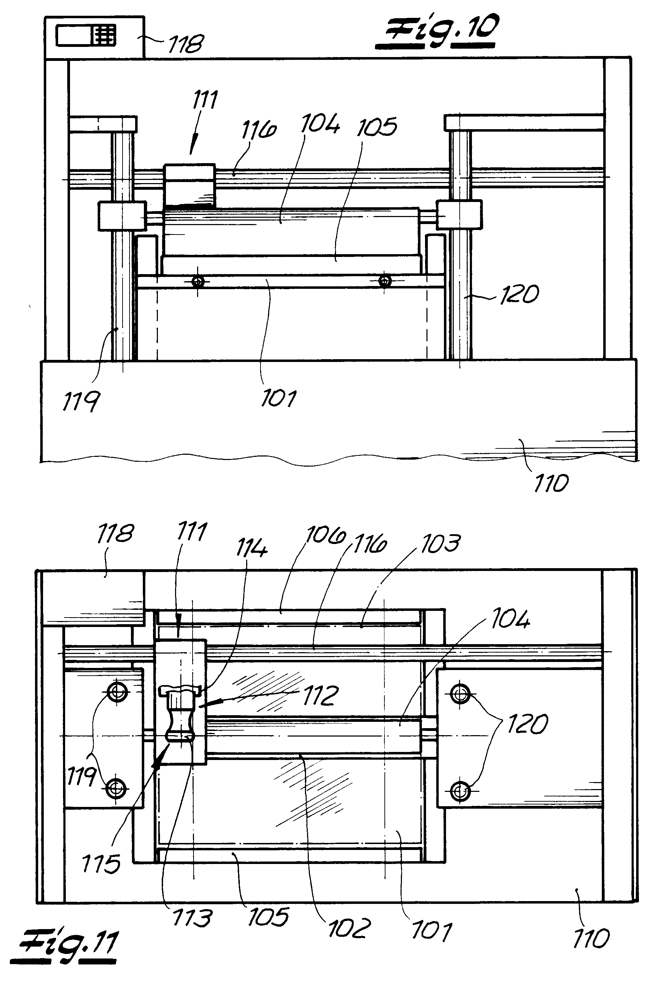

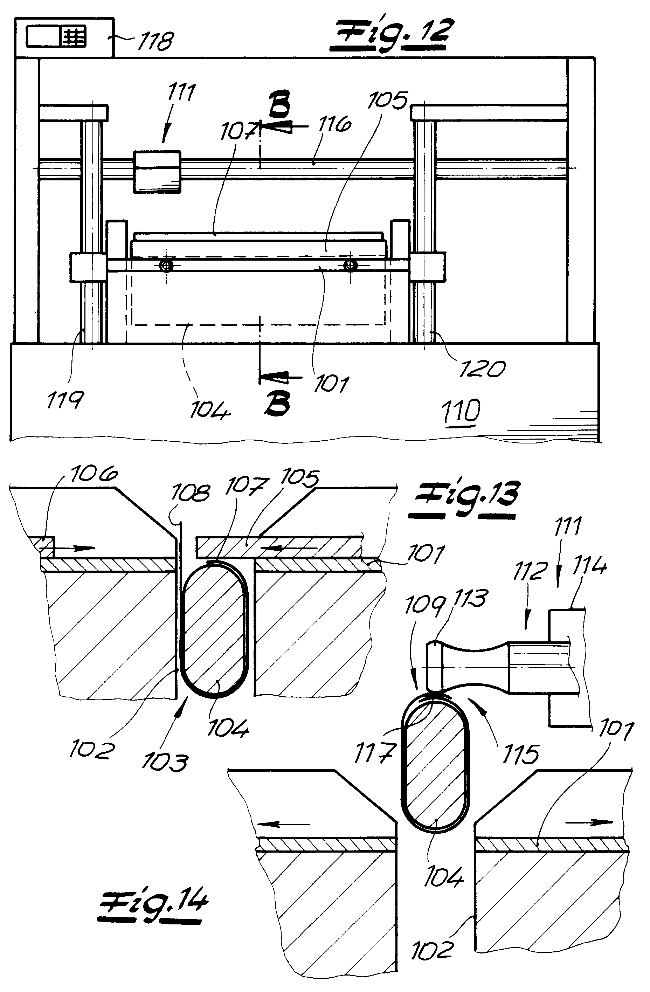

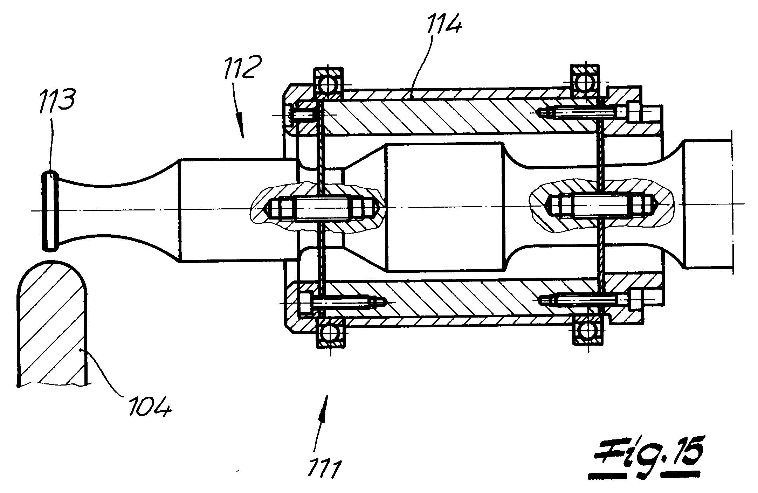

Aus der Fig.1 entnimmt man, daß für jede Latentwärmespeicherzelle von einem rechteckigen Blechzuschnitt 1 ausgegangen wird. Seine Seitenansicht ist dargestellt. Der Blechzuschnitt 1 wird um seine Längsmitte mit Hilfe des als auf und nieder bewegbares Biegeschwert ausgeführten Ambosses 2 einer mit Amboß 2 und Sonotrode 3 ausgerüsteten Ultraschall-Schweißmaschine zu einer an den Stirnseiten offenen U-förmigen Tasche 4 gebogen. Dazu wird auf eine vergleichende Betrachtung der Fig. 1 und 2 verwiesen. Man erkennt, daß nach diesem Biegevorgang die Taschenwände die Oberseite des Ambosses 2 der Ultraschall-Schweißmaschine an jeder Seite mit Randstreifen 5 überragen. In der Fig. 2 sind Hilfswerkzeuge 6 für den nächsten Verfahrensschritt in Form von Pfeilen angedeutet. Aus einer vergleichenden Betrachtung der Fig. 2 und 3 entnimmt man, daß die Randstreifen 5 mit den Hilfswerkzeugen 6, die quer zur Auf und Nieder-Bewegung des Ambosses 2 hin und her bewegbar sind, zu einer auf der Oberseite des Ambosses 2 aufliegenden Überlappungsnaht 7 gebogen sind. Diese Hilfswerkzeuge 6 können bei der Herstellung der U-förmigen Tasche 4 die Widerlager 8 ersetzen. Nunmehr kommt der Verfahrensschritt, der in der Fig. 4 angedeutet wurde. Die Überlappungsnaht 7 wird mit Hilfe der unter Zwischenschaltung der Überlappungsnaht auf den Amboß 2 abgesenkten Sonotrode 3 der Ultraschall-Schweißmaschine zu einer ausreichend dichten Ultraschall-Schweißnaht 9 verschweißt. In kinematischer Umkehr besteht auch die Möglichkeit, das als Amboß 2 ausgeführte Biegeschwert zu der Sonotrode 3 hin anzuheben und dadurch den Schweißkontakt herzustellen. Nunmehr kann die stirnseitig offene Hülse 10 von dem Amboß 2 abgezogen werden (oder umgekehrt). Danach kann die Hülse 10 an den Stirnseiten zur Latentwärmespeicherzelle 11 verschlossen und dabei oder danach mit dem Latentwärmespeichermedium gefüllt werden.

In der Fig. 5 erkennt man die Ultraschall-Schweißnaht 9. In der Fig. 6 erkennt man einen Schnitt in Richtung A-A durch den Gegenstand der Fig. 5, ausschnittsweise. Vergleicht man die Fig. 6 und 7, so erkennt man, daß in die Stirnseiten der stirnseitig offenen Hülse 10 im Querschnitt U-förmige metallische Zellböden 12 unter Beifügung von Lot 13, nach außen offen, eingesetzt worden sind. Die Fig. 8 zeigt, daß in die so geformten Zellenböden 12 eine Preßleiste 14 eingeführt wurde. Unter Verwendung einer von außen gegen den Rand der Latentwärmespeicherzelle 11 gesetzten Gegenpreßleiste 15, die im Ausführungsbeispiel nur durch Pfeile angedeutet ist, werden die Zellenböden 12 mittels Preßlötung eingelötet. Regelmäßig werden die Zellenböden 12 und der Blechzuschnitt 1 aus dem gleichen Werkstoff hergestellt. Nicht dargestellt wurde, daß die Preßlötung mit einer induktiven Erwärmung der für die Preßlötung vorgesehenen Bereiche der Zellenböden 12 und der Hülse 10 durchgeführt werden kann. Auch die schon beschriebene Kühlung bei der Preßlötung wurde zeichnerisch nicht dargestellt. Die Fig. 9 stellt ausschnittsweise und teilweise aufgebrochen eine Seitenansicht der fertigen Latentwärmespeicherzelle 11 dar. Sie macht deutlich, daß einer der Zellenböden 12 mit einem in den Innenraum der Latentwärmespeicherzelle 11 mündenden Rohrstutzen 16 versehen wurde, über den die Einfüllung des Latentwärmespeichermediums durchgeführt wird. Auf eine der schon beschriebenen Art und Weisen erfolgt dabei die Entlüftung des Innenraumes der Latentwärmespeicherzelle 11.

Die in den Figuren 10 bis 15 dargestellte Vorrichtung ist in besonderer Weise für die Durchführung des vorstehend beschriebenen Verfahrens zur Herstellung von in bezug auf die Außenform rechteckigplattenförmigen Latentwärmespeicherzellen eines Kraftfahrzeug-Wärmespeichers, die aus einem dünnwandigen Blechzuschnitt geformt werden, eingerichtet. Zur Beschreibung dieser Figuren gehören die Bezugszeichen 101 bis 120. Zum grundsätzlichen Aufbau gehören:
Ein Auflagetisch 101 mit Formgebungsschlitz 102 für die einzelnen Blechzuschnitte 103,
ein über dem Formgebungsschlitz angeordnetes Biegeschwert 104 mit der Taschenform der Latentwärme speicherzellen entsprechendem Querschnitt. Dieses Biegeschwert 104 ist unter U-förmiger Verformung eines auf dem Auflagetisch 101 aufgelegten Blechzuschnittes 103 in den Formgebungsschlitz 102 einsenkbar,
zwei Überlappungsschieber 105, 106 an dem Auflagetisch, mit denen das Biegeschwert 104 überragende Randbereiche 107, 108 des U-förmig verformten Blechzuschnittes 103 zu einem Überlappungsbereich 109 übereinanderlegbar sind.

Es versteht sich, daß die beschriebenen Bauteile in einem entsprechenden, nur angedeuteten Maschinengestell 110 angeordnet sind. Der vorstehend in ihrem mechanischen Aufbau beschriebenen Vorrichtung gehört eine Ultraschall-Schweißvorrichtung 111 an.

Ultraschall-Schweißvorrichtungen sind in verschiedenen Ausführungen bekannt. Zum Aufbau einer solchen Ultraschall-Schweißvorrichtung gehören ein Amboß, eine Sonotrode und die elektrische Einrichtung für die Erzeugung der Ultraschallenergie, die in die Sonotrode eingeleitet wird, die unter Zwischenschaltung des zu schweißenden Gegenstandes auf dem Amboß arbeitet. Regelmäßig sind die Ultraschallenergie und die Frequenz der Ultraschallschwingungen einstellbar. Die Ultraschallenergie wird über einen piezoelektrischen oder magnetostriktiven Schwinger in die Sonotrode eingeführt, die selbst auch als magnetostriktiver Schwinger gestaltet sein kann.

Bei der erfindungsgemäßen Vorrichtung ist das Biegeschwert 104 als Amboß einer solchen Ultraschall-Schweißvorrichtung 111 ausgebildet. Die Ultraschall-Schweißvorrichtung 111 ist mit einer rotierend angetriebenen Sonotrode 112 versehen, die einen rollenförmigen oder walzenförmigen Sonotrodenkopf 113 aufweist. Die Sonotrode 112 ist in einem Sonotrodenhalter 114 untergebracht. Sie ist mit dem Sonotrodenkopf 113 auf den Überlappungsbereich 109 bei 115 aufsetzbar. Der Sonotrodenhalter 114 ist mit einer Spindel 116 längs des Überlappungsbereiches 109 translatorisch bewegbar und dazu mit einem Sonotrodenhalterantrieb versehen. Es ist entweder die Spindel angetrieben, die über eine Spindelmutter den Sonotrodenhalter 114 bewegt, oder aber die Spindel 116 ist feststehend im Maschinengestell 110 angeordnet und es bewegt sich die Spindelmutter. Jedenfalls erfolgen zwei Bewegungen, einerseits die Rotationsbewegung des Sonotrodenkopfes 113, andererseits die translatorische Bewegung des Sonotrodenhalters 114. Die Auslegung des Rotationsantriebes für die Sonotrode 112 mit dem Sonotrodenkopf 113 sowie die Auslegung des Sonotrodenhalterantriebes sind so eingerichtet, daß die Umfangsgeschwindigkeit des Sonotrodenkopfes 113 mit der translatorischen Geschwindigkeit des Sonotrodenhalters 114 übereinstimmt. Wird nunmehr die Ultraschallenergie so eingestellt, wie es die Dicke des Blechzuschnittes verlangt, und werden die Geschwindigkeiten der beschriebenen Bewegungen entsprechend abgestimmt, so erhält man eine Schweißnaht 117, die allen Anforderungen genügt, insbesondere langfristig dicht ist, und zwar auch dann, wenn der Latentwärmespeicher mit seiner Vielzahl von Latentwärmespeicherzellen in ein Kraftfahrzeug eingebaut ist und den entsprechenden Beanspruchungen ausgesetzt ist. Der Antrieb des Sonotrodenhalters 114 und/oder der Rotationsantrieb der Sonotrode 112 sind abstimmbar. Da der Sonotrodenkopf 113 eine Abnutzung erfährt, sind der Antrieb des Sonotrodenhalters 114 und der Rotationsantrieb der Sonotrode 112 nach Maßgabe der Abnutzung des Sonotrodenkopfes aufeinander abstimmbar. Dazu ist eine Steuereinrichtung mit integriertem Rechner 118 vorgesehen, der den Antrieb des Sonotrodenhalters 114 sowie den Rotationsantrieb der Sonotrode 112 nach Maßgabe des dem Rechner 118 zugeführten Wertes des Abstandes zwischen einem Festpunkt und dem Überlappungsbereich 109 koordiniert und die Antriebe entsprechend steuert.

Das Biegeschwert 104 ist an beidseits des Biegeschwertes 104 angeordneten Spindeln 119, 120 auf und nieder bewegbar. Den Überlappungsschiebern 105, 106 sind entsprechende Stelltriebe zugeordnet.

Gegenstand der Erfindung sind auch Latentwärmespeicherzellen, die nach zumindest einem der Verfahrensansprüche hergestellt worden sind.

## Patentansprüche

1. Verfahren zur Herstellung von in bezug auf die Außenform rechteckig-plattenförmigen Latentwärmespeicherzellen eines Kraftfahrzeug-Wärmespeichers aus dünnwandigem Blech mit den folgenden Verfahrensschritten:
a) es wird für jede Latentwärmespeicherzelle von einem rechteckigen Blechzuschnitt ausgegangen,
b) der Blechzuschnitt wird um seine Längsmitte mit Hilfe des als aufundnieder bewegbares Biegeschwert ausgeführten Ambosses einer mit Amboß und Sonotrode ausgerüsteten Ultraschall-Schweißmaschine zu einer an den Stirnseiten offenen U-förmigen Tasche gebogen, deren Taschenwände die Oberseite des Ambosses der Ultraschall-Schweißmaschine an jeder Seite mit Randstreifen überragen,
c) die Randstreifen werden mit Hilfswerkzeugen, die quer zur Aufundnieder-Bewegung des Ambosses hinundher bewegbar sind, zu einer auf der Oberseite des Ambosses aufliegenden Überlappungsnaht gebogen,
d) die Überlappungsnaht wird mit Hilfe der unter Zwischenschaltung der Überlappungsnaht auf den Amboß abgesenkten Sonotrode der Ultraschall-Schweißmaschine zu einer dichten Schweißnaht verschweißt,
wobei die stirnseitig offene Latentwärmespeicherzelle von dem Amboß abgezogen und danach an den Stirnseiten verschlossen sowie dabei oder danach mit dem Latentwärmespeichermedium gefüllt wird.

2. Verfahren nach Anspruch 1, wobei von einem Blechzuschnitt aus technisch reinem, sauerstofffreiem Kupfer ausgegangen wird.

3. Verfahren nach Anspruch 1, wobei von einem Blechzuschnitt aus Stahl mit Nickelplattierung ausgegangen wird.

4. Verfahren nach einem der Ansprüche 1 bis 3, wobei mit einem Amboß gearbeitet wird, der eine Dicke von ein bis einigen Millimetern, vorzugsweise von etwa 5 mm, aufweist.

5. Verfahren nach einem der Ansprüche 1 bis 4, wobei die Schweißnaht schweißgutbeilagefrei ausgeführt wird.

6. Verfahren nach einem der Ansprüche 1 bis 5, wobei in die Stirnseiten der stirnseitig offenen Latentwärmespeicherzelle im Querschnitt U-förmige metallische Zellenböden unter Beifügung von Lot, nach außen offen, eingesetzt werden, in die eine Preßleiste eingeführt wird, und wobei unter Verwendung einer von außen gegen den Rand der Latentwärmespeicherzelle gesetzten Gegenpreßleiste die Zellenböden mittels Preßlötung eingelötet werden.

7. Verfahren nach Anspruch 6, wobei die Zellenböden aus dem gleichen Werkstoff bestehen wie der Blechzuschnitt der Latentwärmespeicherzelle.

8. Verfahren nach einem der Ansprüche 6 oder 7, wobei die Preßlötung mit induktiver Erwärmung der für die Preßlötung vorgesehenen Bereiche der Zellenböden und der Latentwärmespeicherzelle durchgeführt wird.

9. Verfahren nach Anspruch 8, wobei zumindest die Latentwärmespeicherzelle in unmittelbarem Anschluß an die für die Preßlötung vorgesehenen Bereiche, z. B. durch Beblasen mit Schutzgas, gekühlt werden.

10. Verfahren nach einem der Ansprüche 6 bis 9, wobei zu mindest einer der Zellenböden mit einem in den Innenraum der Latentwärmespeicherzelle mündenden Rohrstutzen versehen wird, über den die Einfüllung des Latentwärmespeichermediums durchgeführt wird.

11. Vorrichtung für die Durchführung des Verfahrens zur Herstellung von in bezug auf die Außenform rechteckigplattenförmigen Latentwärmespeicherzellen eines Kraftfahrzeug-Wärmespeichers aus einem dünnwandigen, rechteckigen Blechzuschnitt, welche Latentwärmespeicherzellen ein taschenförmiges Bauteil und darin stirnseitig eingesetzte Zellenböden aufweisen, nach den Patentansprüchen 1 bis 10 - mit
einem Auflagetisch (101) mit Formgebungsschlitz (102) für die einzelnen Blechzuschnitte (103),
einem über dem Formgebungsschlitz (102) angeordneten Biegeschwert (104) mit der Taschenform der Latentwärmespeicherzellen entsprechendem Querschnitt, welches unter U-förmiger Verformung eines aus dem Auflagetisch (101) aufgelegten Blechzuschnittes (103) in den Formgebungsschlitz (102) einsenkbar ist und
Überlappungsschiebern (105, 106) an dem Auflagetisch (101), mit denen das Biegeschwert (104) überragende Randbereiche (107, 108) des U-förmig verformten Blechzuschnittes (103) zu einem Überlappungsbereich (109) übereinanderlegbar sind,
wobei außerdem die Kombination der folgenden Merkmale verwirklicht ist:
a) das Biegeschwert (104) ist als Amboß einer der Vorrichtung angehörenden Ultraschall-Schweißvorrichtung (111) ausgebildet,
b) die Ultraschall-Schweißvorrichtung (111) ist mit einer rotationsangetriebenen Sonotrode (112) mit rollenförmigem oder walzenförmigem Sonotrodenkopf (113) versehen, die in oder an einem Sonotrodenhalter (114) angebracht ist und auf den Überlappungsbereich (109) aufsetzbar ist,
c) der Sonotrodenhalter (114) ist mit einer Spindel (116) längs des Überlappungsbereiches (109) translatorisch und dazu mit einem Sonotrodenhalterantrieb versehen,
wobei die Auslegung des Rotationsantriebes für den Sonotrodenkopf (113) sowie die des Sonotrodenhalterantriebes so eingerichtet sind, daß die Umfangsgeschwindigkeit des Sonotrodenkopfes (113) mit der translatorischen Geschwindigkeit des Sonotrodenhalters (114) übereinstimmt.

12. Vorrichtung nach Anspruch 11, wobei der Antrieb des Sonotrodenhalters (114) und/oder der Rotationsantrieb des Sonotrodenkopfes (113) abstimmbar sind.

13. Vorrichtung nach einem der Ansprüche 11 oder 12, wobei der Antrieb des Sonotrodenhalters (114) und/oder der Rotationsantrieb des Sonotrodenkopfes (113) nach Maßgabe der Abnutzung des Sonotrodenkopfes (113) abstimmbar sind.

14. Vorrichtung nach einem der Ansprüche 11 bis 13, wobei das Biegeschwert (104) an beidseits des Biegeschwertes angeordneten Spindeln (119, 120) auf und nieder bewegbar ist.

15. Vorrichtung nach einem der Ansprüche 11 bis 14, wobei die Überlappungsschieber (105, 109) an Stelltriebe, z. B. Stellspindeln, angeschlossen sind.

16. Vorrichtung nach einem der Ansprüche 11 bis 15, wobei eine Steuereinrichtung mit integriertem Rechner (118) vorgesehen ist, der den Antrieb des Sonotrodenhalters (114) sowie den Rotationsantrieb des Sonotrodenkopfes (113) nach Maßgabe des dem Rechner (118) zugeführten Wertes des Abstandes zwischen einem Festpunkt und dem Überlappungsbereich (109) koordiniert und die Antriebe entsprechend steuert.

17. Latentwärmespeicherzellen, die nach zumindest einem der Verfahrensansprüche 1 bis 10 hergestellt worden sind.
